**Europäisches Patentamt**

**European Patent Office**

**Office européen des brevets**

(11) Publication number: **0 165 791**
**B1**

## EUROPEAN PATENT SPECIFICATION

(45) Date of publication of patent specification: **19.09.90**

(51) Int. Cl.⁵: **B 32 B 25/08**

(21) Application number: **85304292.7**

(22) Date of filing: **14.06.85**

(54) **Composite films and their preparation.**

(30) Priority: **15.06.84 US 621179**
**31.01.85 US 696738**
**08.02.85 US 699832**

(43) Date of publication of application:
**27.12.85 Bulletin 85/52**

(45) Publication of the grant of the patent:
**19.09.90 Bulletin 90/38**

(84) Designated Contracting States:
**BE DE FR GB IT NL SE**

(56) References cited:
**FR-A-2 405 772**
**GB-A-1 413 332**
**US-A-4 210 686**
**US-A-4 368 240**
**US-A-4 399 181**
**US-A-4 500 681**

(73) Proprietor: **EXXON RESEARCH AND ENGINEERING COMPANY**
**P.O.Box 390, 180 Park Avenue**
**Florham Park, New Jersey 07932 (US)**

(72) Inventor: **Hazelton, Donald Ross**
**89 Glenmore Drive**
**Chatham New Jersey (US)**
Inventor: **Shulman, Cindy Beth**
**250 Gorge Road**
**Cliffside Park New Jersey (US)**
Inventor: **Kresge, Edward Nathan**
**68 Parlin Lane**
**Watchung New Jersey (US)**
Inventor: **Middlesworth, Jeffrey Alan**
**458 Lost Rock Drive**
**Webster Texas (US)**

(74) Representative: **Dew, Melvyn John et al**
**Esso Chemical Ltd. Esso Chemical Research Centre P.O. Box 1**
**Abingdon Oxfordshire, OX13 6BB (GB)**

Courier Press, Leamington Spa, England.

## Description

Parenteral drugs are commonly stored in plasticized polyvinyl chloride pouches and transferred directly from the pouch to the patient-user. The advantage of plasticized PVC for such applications is that it is clear and can be autoclaved for sterilization without damage to the pouch. Additionally, the plasticized PVC pouch has a sufficiently high burst strength so as to withstand dropping or other rough handling. However, plasticized PVC has a high water vapor transmission rate (WVTR) at the thickness of film used for the pouches, e.g., 15 g/m²/day for a 0.035 cm (14 mil) film. The pouch must therefore be overwrapped to reduce water loss to minimize the drug concentration variation which would otherwise occur. The overwrap is generally a blend of polyisobutylene (PIB) and high density polyethylene (HDPE) comprising about 30 wt% PIB and 70 wt% HDPE. A further disadvantage of PVC is that it requires liquid plasticizers such as phthalates which can be leached from the bag and are suspected carcinogens.

U.S. Patent No. 4,140,162 discloses an autoclavable composition which is a polymer blend comprising (a) about 10 to 40 wt% polypropylene, (b) 40 to 85 wt% of a block copolymer comprising (1) a central block comprising 50—85 wt% of the polymer of an ethylene-butylene copolymer and (2) terminal blocks of polystyrene, and (3) 0 to 40 wt% of polyethylene, poly(ethylene/vinyl acetate), or poly(ethylene-propylene). The composition is suggested for use in blood containing bags, tubing and medical solution containers. It is deficient from the standpoint of water vapor transmission rate to be made economically into an overwrap-free container and does not heat seal readily.

Enteral feeding bags used to administer liquid diets are prepared from a sandwich laminate comprising an inner heat seal layer of about 40 wt% polyisobutylene and about 60 wt% polypropylene. The first outer layer of the laminate comprises about 12.7 microns (0.5 mils) of polyester and the second layer about 12.7 microns (0.5 mils) of polyvinylidene chloride. A tie layer of adhesive is required. The laminate has a thickness of about 127 microns (5 mils). It lacks the flexibility, softness and "feel" of the plasticized PVC bags and does not have sufficient burst strength or drop impact strength for use as blood or parenteral drug bags.

US—4 210 686, which is apparently related to US—4 140 162, also discloses a multiple-layered, autoclavable, flexible plastic sheet. This comprises (a) a first layer consisting of 30—90% thermoplastic rubbery block copolymer having rubbery olefin blocks and polystyrene blocks, and 10—70% polyolefin principally derived from at least one of propylene, ethylene and 4-methylpentene-1; and (b) a second layer consisting of a semi crystalline such polyolefin. The polyolefin of (a) and/or (b) may include minor amounts of other olefin polymer units such as butadiene, isoprene, isobutylene, 1-butene, 1-hexene, or the like.

U.S. Patent No. 4,399,181 discloses laminates of two or more polymer compositions which have utility as shrink films. One of the blends disclosed includes *inter alia* butyl rubber with polypropylene. The butyl rubber is equated to ethylene-alpha olefin copolymers and block copolymerized thermoplastic elastomers of styrene-conjugated diene, the preferred polymer being ethylene-alpha-olefin copolymer. In general, the laminates have one layer which comprises 50—100% crystalline polybutene or a sandwich constitution wherein the crystalline polybutene comprises 50% to 100% of the core. The outer layer of the "sandwich" comprises a blend of at least two polymers, one of which is a soft polymer, e.g., butyl rubber.

Japanese Published Patent Application 51097649 (Appln. 22447/75), discloses blends for ethylene-alpha-olefin copolymers with polypropylene for use as a substitute for plasticized PVC.

U.S. Patent 4,203,876 discloses blends of a thermoplastic polymer, vegetable fibrous material and a synthetic elastomer. The blend can comprise polypropylene with ethylene/alpha olefin copolymer and wood fibers.

U.S. Patent No. 4,500,681, discloses a monolayer packaging film comprising polypropylene, polyisobutylene and ethylene/vinyl acetate copolymer. The film lacks clarity and has a high internal haze. The composition comprises about 20—60 wt% PIB, 20—65 wt% of polypropylene of RCPP and 7 to about 40 wt% of EVA.

What is required for use in parenteral drug or blood bags is a polymer composition having a low water vapor transmission rate, good clarity and a high burst strength when formed into bags. Additionally, the composition should be free of leachable components such as liquid plasticizers, e.g., dioctylphthalate, and have high tear resistance, high flexibility and be autoclavable at steam temperatures of 121°C.

With reference to the accompanying drawings,
Figure I is a schematic of the extrusion process of the invention; and
Figure II shows the effect of film gauge and composition on WVTR properties.

It has surprisingly been found that flexible polymer compositions of high clarity with acceptable burst strength which are steam autoclavable can be prepared by forming a multi-layered structure of a polyolefin and an elastomeric composition wherein the elastomeric composition has a low water vapor transmission rate.

According to one aspect of the present invention there is provided a process for preparing a composite film which comprises:

a) co-extruding a molten composition comprising a first co-extruded layer and at least one second co-extruded layer wherein the first co-extruded layer is a rubber containing composition comprising from 50 to 85 wt% rubber and the second co-extruded layer comprises a polyolefin thereby forming a web of a

2

composite film of said first and second co-extruded layers;

b) passing the web at a temperature above its softening point through the nip of two counterrotating rollers, one of said rolls being a first highly polished metal chill roll and a second roller being a resilient roller;

c) cooling the blend to produce a composite film having at least one surface with a 45° gloss of at least 40.

According to another aspect of the invention there is provided a composite film comprising a rubber containing core component and at least one skin layer comprising a polyolefin resin characterised in that the rubber containing core component comprises from 50 wt% to 85 wt% of rubber selected from PIB, butyl rubber, EPM, EPDM, halogenated butyl rubber or polychloroprene, and from 15 to 50 wt% of a polyolefin.

The preferred elastomeric (rubber containing) composition contains an isobutylene elastomer which has a low water vapor transmission rate, for example, polyisobutylene, butyl rubber or halogenated butyl rubber. The polyolefin can be semi crystalline or crystalline resins which have melting points in excess of 110°C to permit steam autoclaving, e.g., polypropylene, reactor polypropylene, linear low density polyethylene and polybutene-1.

This invention relates to a composite film suitable for use in parenteral drug or blood container applications. In particular, it relates to a clear, flexible, autoclavable film which when formed into a parenteral drug or blood bag has a high burst strength. In a preferred embodiment, a 178 micron (7 mil) film has a water vapor transmission rate of less than 2.5 $g/m^2/day$.

The composite film of this invention comprises at least one layer of polyolefin and at least one layer of an elastomeric composition. Preferably, the elastomeric composition is sandwiched between two layers of polyolefin composition. Since the film must withstand autoclaving at about 121°C it is preferred that it not shrink when heated in an autoclave. Shrinkage can result in rupture of the bag formed from the film. In order to impart thermal stability and eliminate shrinkage, the elastomeric composition is blended with a minor amount of polyolefin, e.g., at least 15 wt%.

The polyolefin resins which are suitable for use in the practice of this invention for blending with the elastomer are those which have a semi-crystalline or crystalline melting point of at least 110°C. Illustrative, non-limiting examples of the polyolefins suitable for use in the practice of this invention are polypropylene (PP), linear low density polyethylene (LLDPE) and polybutylene (PB). As used in the specification and claims, the term "polypropylene" includes homopolymers of propylene as well as reactor copolymers of polypropylene (RCPP) which can contain about 1 to aout 20 wt% ethylene or an alpha olefin comonomer of 4 to 16 carbon atoms. The polypropylene can be highly crystalline isotactic or syndiotactic polypropylene. The RCPP can be either a random or block copolymer. The density of the PP or RCPP can be about 0.89 to about 0.91 g/cc.

High density polyethylene (HDPE), useful as the polyolefin resin layer of the multi-layer film of this invention, has a density of about 0.941 to about 0.965 g/cc. High density polyethylene is an established product of commerce and its manufacture and general properties are well known to the art. Typically, HDPE has a relatively broad molecular weight distribution, characterized by the ratio of weight average molecular weight to number average molecular weight of from about 20 to about 40.

The term "polybutylene" generally refers to thermoplastic resins of both poly(1-butene) homopolymer and the copolymer with, for example, ethylene, propylene, pentene-1, etc. Polybutylene is manufactured via a stereospecific Ziegler-Natta polymerization of monomer(s). Commercially useful products are of high molecular weight and isotacticity. A variety of commercial grades of both homopolymer and ethylene copolymer are available with melt indices that range from about 0.3 to about 20 g/10 min.

The term "low density polyethylene" or "LDPE" as used in the specification and claims mean both low and medium density polyethylene having densities of about 0.910 to about 0.940 g/cc. The terms include linear polyethylene as well as copolymers of ethylene which are thermoplastic resins.

Linear low density polyethylene (LLDPE) is a relatively new class of low density polyethylene characterized by little, if any, long chain branching, in contrast to conventional LDPE. The processes for producing LLDPE are well known in the art and commercial grades of this polyolefin resin are available. Generally, it is produced in gas-phase fluidized bed reactors or liquid-phase solution process reactors; the former process can be carried out at pressures of about 700 to 2100 kPa and temperatures as low as 100°C.

Polyethylene copolymers suitable as the polyolefin resins of this invention include copolymers of ethylene with unsaturated esters of lower carboxylic acids as well as the carboxylic acids *per se*. In particular, copolymers of ethylene with vinylacetate or alkyl acrylates, for example, methyl acrylate and ethyl acrylate, can be employed. These ethylene copolymers typically comprise about 60 to about 97 wt% ethylene, preferably about 70 to 95 wt% ethylene, more preferably about 75 to about 90 wt% ethylene. The expression "ethylene copolymer resin" as used in the specification and claims means, generally, copolymers of ethylene with unsaturated esters of lower ($C_1$—$C_4$) monocarboxylic acids and the acids themselves; e.g., acrylic acid, vinyl esters or alkyl acrylates, while the expression "EVA" means, specifically, ethylene-vinylacetate copolymers. Illustrative of the acrylates which can be utilized are methyl acrylate and ethyl acrylate.

For the purpose of this disclosure, as used in the specification and claims the term polyolefin includes PVDC. The rubbers which can be used in the practice of this invention include both synthetic and natural rubbers; preferably the rubbers have a glass transition temperature (Tg) of less than 0°C. Illustrative, non-limiting examples of rubbers suitable for use in the practice of the process of this invention include polyisobutylene (PIB), butyl rubber, halogenated butyl rubber, ethylene propylene rubber (EPM), ethylene-propylenediene rubber (EPDM), polyisoprene, polychloroprene, styrene-butadiene rubber, polybutene copolymers, nitrile rubbers, chlorosulfonated polyethylene, etc. While polyisobutylene (PIB) is not a true rubber because it cannot be vulcanized, it can be utilized in the practice of this invention provided that the PIB has a viscosity average molecular weight (Flory) of about 900,000 to about 1.6 million.

The term "rubber" as used in the specification and claims means any natural or synthetic polymer which can be vulcanized or cured so as to exhibit elastomeric properties. For the purpose of this invention, PIB is considered a rubber although it cannot be vulcanized.

The terms EPM and EPDM are used in the sense of their ASTM designations (ASTMD-1418-72a). EPM is an ethylene-propylene copolymer which can be cross-linked by radiation curing or peroxide curing.

As used in the specification and claims the term "EPDM" means terpolymers of ethylene and alpha-olefin and a non-conjugated diene. The non-conjugated diolefin can be straight chain, branched chain or cyclic hydrocarbon di-olefins having about 6 to about 15 carbon atoms such as:

A. straight chain acyclic dienes such as 1,4-hexadiene and 1,6-octadiene;

B. branched chain acyclic dienes such as 5-methyl-1, 4-hexadiene; 3,7-dimethyl-1,6-octadiene; 3,7-dimethyl-1, 7-octadiene and the mixed isomers of dihydro-myrcene and dihydro-ocimene;

C. single ring alicyclic dienes such as 1,3-cyclopentadiene; 1,4-cyclohexadiene; 1,5-cyclo-octadiene and 1,5-cyclododecadiene;

D. multi-ring alicyclic fused and bridged ring dienes such as tetrahydroindene, methyltetra-hydroindene, dicyclopentadiene; bicyclo-(2,2,1)-hepta-2,5-diene; alkenyl-, alkylidene-, cycloalkenyl-, and cycloalkylidene- norbornenes, such as 5-methylene-2-norbornene (MNB), 5-propenyl-2-norbornene, 5-isopropylidene-2-norbornene, 5-(4-cyclopentenyl)-2-norbornene, 5-cyclo-hexylidene-2-norbornene, 5-vinyl-norbornene and norbornadiene.

Of the non-conjugated dienes typically used to prepare EPDM terpolymers, the preferred dienes are dicyclopentadiene, 1-, 4-hexadiene, 5-methyl-2-norbornene and 5-ethylidene-2-norbornene. Particularly preferred diolefins are 5-ethylidene-2-norbornene (ENB) and 1,4-hexadiene.

EPDM elastomers and their general method of manufacture are well known in the art. The preferred EPDM elastomers contain about 20 to about 90 wt% ethylene, more preferably about 30 to 80 wt% ethylene, most preferably about 35 to about 75 wt% ethylene.

The alpha-olefins suitable for use in the preparation of EPDM are preferably $C_3$—$C_{16}$ alpha olefins. Illustrative non-limiting examples of such alpha olefins are propylene, 1-butene, 1-pentene, 1-hexane, 1-octene and 1-dodecene. The alpha olefin is generally incorporated into the EPDM polymer at about 10 to about 80 wt%, more preferably at about 20 to about 70 wt%. The non-conjugated diene is incorporated into the EPDM at about 0.5 to about 15 wt%; more preferably about 1 to about 5 wt%, e.g., 3 wt%.

The term "nitrile rubber" means an acrylonitrile copolymer rubber. Suitable nitrile rubbers comprise rubbery polymers of 1,3-butadiene or isoprene and acrylonitrile. Preferred nitrile rubbers comprise polymers of 1,3-butadiene and about 20—50 wt% acrylonitrile. Any nitrile rubber which is a "solid" rubber having an average molecular weight of at least 50,000, and preferably between about 100,000—1,000,000 can be used. Commercially available nitrile rubbers suitable for the practice of the invention are described in *Rubber World Blue Book,* 1980 Edition, "Materials and Compounding Ingredients for Rubber", pages 386—406.

Butyl rubber is a copolymer of an isoolefin and a conjugated multiolefin. The useful copolymers comprise a major portion of isoolefin and a minor amount, preferably not more than 30 wt%, of a conjugated multiolefin. The preferred copolymers comprise about 85—99.5 wt% (preferably 95—99.5 wt%) of a $C_4$—$C_7$ isoolefin, such as isobutylene, and about 15—0.5 wt% (preferably about 5—0.5 wt%) of a multiolefin of about 4—14 carbon atoms. These copolymers are referred to in the patents and literature as "butyl rubber"; see, for example, the textbook *Synthetic Rubber* by G. S. Whitby (1954 edition by John Wiley and Sons, Inc.), pages 608—609, etc. The term "butyl rubber" as used in the specification and claims includes the aforementioned copolymers of an isoolefin having 4—7 carbon atoms and about 0.5 to 20 wt% of a conjugated multiolefin of about 4—10 carbon atoms. Preferably these copolymers contain about 0.5 to about 5% conjugated multiolefin. The preferred isoolefin is isobutylene. Suitable conjugated multiolefins include isoprene, butadiene, dimethyl butadiene, piperylene, etc.

Commercial butyl rubber is a copolymer of isobutylene and minor amounts of isoprene. It is generally prepared in a slurry process using methyl chloride as a vehicle and a Friedel-Crafts catalyst as the polymerization initiator. The methyl chloride offers the advantage that $AlCl_3$, a relatively inexpensive Friedel-Crafts catalyst is soluble in it, as are the isobutylene and isoprene comonomers. Additionally, the butyl rubber polymer is insoluble in the methyl chloride and precipitates out of solution as fine particles. The polymerization is generally carried out at temperatures of about −90°C to −100°C. See U.S. Patent Nos. 2,356,128 and 2,356,129.

In the halogenation process, butyl rubber in solution is contacted with chlorine or bromine in a series of high-intensity mixing stages. Hydrochloric or hydrobromic acid is generated during the halogenation step and must be neutralized. For a detailed description of the halogenation process see U.S. Patent Nos.

3,029,191 and 2,940,960, as well as U.S. Patent No. 3,099,644 which describes a continuous chlorination process.

The rubbers used in the practice of this invention are preferably utilized in their unvulcanized state. The preferred rubber is PIB. In a preferred embodiment, the rubber is blended with about 15 to 40 wt% of a polyolefin, preferably about 15 to 35 wt% of polyolefin. In another embodiment of the invention, about 55 to about 70 wt% rubber is blended with about 30 to about 45 wt% polyolefin. The preferred polyolefins suitable for blending with the rubbers are polypropylene (PP), and reactor copolymers of polypropylene (RCPP); more preferably RCPP are blended with the rubber. Blending of the rubber with a polyolefin eliminates or substantially reduces shrinkage of the composite film of this invention upon heating. For example, a laminate of sandwich construction prepared having outer surfaces of PP and a core of 100% PIB, will shrink when formed into a bag, filled with a liquid and autoclaved. The shrinkage is sufficient to occasionally cause the bag to rupture. Blending the PIB with a polyolefin eliminates this problem. The rubber component of the rubber composition comprises about 50 to about 85 wt% of the composition, preferably about 60 to about 85 wt%, more preferably about 65 to about 85 wt%, the balance being polyolefin.

The compositions of this invention can include rubber extender oils whose refractive index is about the same as that of the elastomeric compounds as well as processing aids and stabilizers. Parenteral drugs are generally steam autoclaved at about 121°C in order to sterilize the drug. The bag prepared from the composite film of this invention must not only withstand the autoclave conditions, it must also exhibit a low water loss both during autoclaving and in storage. Rubbers based on isobutylene, e.g., PIB and butyl rubber, have the lowest water vapor transmission rate among polymers. Hence, they are the preferred rubbers of this invention. The PIB, butyl rubbers and halogenated butyl rubbers are most advantageously used in composite films of the sandwich type wherein the rubber core is encased in outer faces of polyolefin resin since these isobutylene containing polymers are amorphous in character and have a surface tack which results in blocking of the film when wrapped on a mandrel or core. Where a two layer laminate is to be used, the preferred rubbers are EPM or EPDM. The rubbers employed in the film and process of this invention are generally used in the unvulcanized or "gum" state.

The thickness of the composite film is not critical, however, it must be sufficient to provide adequate vapor barrier properties and bursting strength.

The water vapor transmission rate (WVTR) is preferably less than 2.5 $g/m^2/day$. This WVTR can be achieved using composite films of less than 275 microns, preferably less than 175 microns. While the thickness of the film can vary over a wide range, its thickness will depend in part on the size of the container to be fabricated from it. Film thickness of 25 to 300 microns can advantageously be used in the practice of this invention, preferably the composite films of this invention are about 100 to about 300 microns, more preferably about 150 to 300 microns. Thicker films can be used but they offer no technical advantage and are uneconomical.

The advantageous water vapor barrier properties of the compositions of this invention may be appreciated by reference to Figure II. Plasticized PVC has a WVTR of about 15 $g/m^2/day$ for a 350 micron film. When a liquid-containing plasticized PVC bag is over-wrapped with a PIB/HDPE overwrap, the WVTR is reduced to 2.5 for an equivalent of 450 microns of barrier material. The Kraton/RCPP curve is indicative of the WVTR for the product of U.S. Patent No. 4,140,162 while the VX/RCPP curve is indicative of the WVTR of the film of this invention. It is noted that at 175 microns the films of this invention are more effective vapor barriers than the best prior art compositions at about 250 microns.

The polyolefin layer component of the composite film represents about 2 to about 40% of the film thickness, preferably about 5 to 30%, more preferably about 8 to 20%. Generally the polyolefin component will be about 5 to 50 microns in thickness, preferably about 10 to about 40 microns.

While haze will be in part a result of the film composite composition, substantially clear films can be prepared by using processing techniques which result in smooth surfaced film.

It had previously been believed that the clarity problem with these blends was due to the extent or degree of dispersion of rubber particles in the blend. However, it has been surprisingly discovered that haze in elastomer/polyolefin blends is a surface phenomenon. The following experiments demonstrated that the problem is due primarily to the surface condition of the film.

Haze measurements were taken in air on films that were sandwiched between microscope-quality glass plates. The same films were then coated on both sides with droplets of oil having a refractive index of 1.492. Assuming surface scattering effects have been minimized, i.e., the R.I. (refractive index) of the oil closely matches that of the film and the glass surfaces are perfectly flat, any residual haze after the oil is applied is predominantly internal to the film.

The following resin blends were prepared by mixing the components in the proportion indicated and were extruded to form monolayer films:

# EP 0 165 791 B1

TABLE I

| Film blend | Elastomer (wt%) | Polyolefin (wt%) | | |
| --- | --- | --- | --- | --- |
| | | LLDPE | PP | HDPE |
| A | 40[1] | | 60[3] | |
| B | 40[5] | | 60[3] | |
| C | 25[6] | 14[7] | 61[3] | |
| D | 30[9] | | 70[8] | |
| E | 30[2] | | | 70[4] |
| F | 30[5] | | | 70[4] |

[1] PIB, Flory $M_v$=1,200,000
[2] PIB, Flory $M_v$=1,600,000
[3] PP 4MFR
[4] HDPE 0.3 MI
[5] Butyl 065, Mooney of 41—49 (ML1+8) @ 100°C; 0.8% unsaturation
[6] EPM rubber comprising 74—78 wt% ethylene; Mooney (1+8) 127°C=50
[7] LLDPE (1 MI)
[8] PP (PPRC 4MFR)
[9] EPDM, ethylene content—80 wt%, Mooney (1+8) 127°C=15

Test procedures:
Properties of various film samples were measured using the following test procedures:

| | |
| --- | --- |
| Tensile | ASTM D 882 |
| % Elongation | ASTM D 882 |
| Tear | ASTM D 1922 |
| Dart impact | ASTM D 1709 |
| Stiffness | ASTM D 882 |
| % Haze | ASTM D 1003 |
| Gloss | ASTM D 2457 |

The relative haze of the samples was determined in the aforedescribed manner. The results are shown in Table II.

TABLE II

| Film blend | A | B | C | D | E | F |
| --- | --- | --- | --- | --- | --- | --- |
| Thickness (microns) | 100 | 50 | 150 | 150 | 50 | 100 |
| Relative Haze | | | | | | |
| External | 82 | 90 | 93 | 95 | 9 | 55 |
| Internal | 18 | 10 | 7 | 5 | 91 | 45 |

The data in Table II reveals that for elastomer/HDPE (fractional melt index) blends (those used commercially in medical overwrap applications) the haze is predominantly internal and is crystallization related (Examples E & F). However, in the elastomer bi-blends and tri-blends of Films A, B, C and D, the haze is primarily a function of film surface roughness. The discovery that haze is a surface phenomenon

6

EP 0 165 791 B1

makes possible the use of rubber-rich polyolefin blends in this invention, while still achieving good clarity in a non-oriented film.

The process of the present invention may be carried out by utilizing conventional extruders and slotted dies used in the manufacture of films. The counterrotating rollers through which the web is passed may consist of a chrome plated chill roll for quenching the film and a resilient roller preferably having a glossy rubber surface.

The resilient roller may be of the type described in U.S. Patent 4,368,240. The roller may include a metal core provided with an intermediate layer of resilient material such as 60—80 Shore A durometer rubber and finally by a skin layer of glossy rubber such as silicone rubber. The skin layer and intermediate layer in combination impart a Shore A hardness value in the range of 65 to 95. The skin thickness of the inner layer and skin layer will be dictated by practical considerations for manufacturing the film and economics. Thicknesses that have worked particularly well in processing elastomeric blends of the present invention are a skin layer thickness of 250 microns and an inner layer thickness of 6,250 microns.

Suitable silicones for coating the roller include silicone resins sold by General Electric under the trade designation RTU 670 and sold by Dow Corning Corporation under the trade designation Sylastic and Sylgard. These resins can be used in the manufacture of a rubber roll having a high gloss and durable surface as described in U.S. Patent 4,368,240. Moreover, silicone rubber rolls of this type may be purchased from Nauta Roll Corporation of Kensington, Conn.

An air knife may be used to assist in cooling the web between the die and the nip of the counterrotating rollers. The cooling effects aid in eliminating draw resonance and also in preventing the web from sticking to the rubber roll.

Preparation of compositions usable in this invention can be achieved in several different ways. The various components may be brought into intimate contact by, for example, dry blending these materials and then passing the overall composition through a compounding extruder. Alternatively, the components may be fed directly to a mixing device such as a compounding extruder, high shear continuous mixer, two roll mill or an internal mixer such as a Banbury mixer. The optional ingredients previously described can be added to the composition during this mixing operation. Overall, the objective is to obtain a uniform dispersion of all ingredients and this is readily achieved by inducing sufficient shear and heat to cause the melting of the plastics component(s) controlled as is normally done by one skilled in the art so as to avoid molecular weight degradation.

In operation, the elastomer/polyolefin blend is extruded from a slotted die to form a molten web which is passed through the nip of the counterrotating chill roll and resilient roll. An air knife may be used on either or both sides of the web to assist in the cooling action if the drawdown is sufficient to cause draw resonance. The web enters the nip at a temperature above the melting point of the blend. The resilient roller presses the web into intimate contact with the chill roll causing the web to cool and solidify. The web is carried around a circumferential portion of the chill roll and withdrawn and formed into a roll in the conventional manner.

The rubber composition of the composite film generally represents about 60 to about 98% of the film thickness. While the rubber compositions cast using prior art techniques are not clear, when they are used in conjunction with the polyolefin component, relatively haze free composites are formed. The term "clear" as used in the specification and claims with respect to the composite films of this invention mean films having a haze of less than 30% as measured on a Gardner Instrument XL-211 hazemeter (ASTM D1003). Preferably, the film has a haze of less than 20%, more preferably less than 10%.

Effects of polishing with silicone rubber roll surface:

In order to demonstrate the effects of polishing with a high gloss rubber roll/chrome chill roll vs. a 3 roll stack of rolls, the following experiments were conducted.

The resin of Film Blend C was extruded from a conventional slotted die using a conventional extruder and cast, or processed through the nip of the rubber roll arrangement.

Rubber roll arrangement:

Chromed chill roll maintained at 21°—38°C.

Rubber roll—silicone coated (purchased from Nauta Roll Corporation, Inc.)

The physical properties shown in Table III of the film samples were determined.

TABLE III

| Film thickness (microns) | Cast | | | Polished | | |
|---|---|---|---|---|---|---|
| | 100 | 200 | 300 | 100 | 200 | 300 |
| Tensile, MPa MD | 46.9 | 33.8 | 29.7 | 49.7 | 92.8 | 31.0 |
| TD | 36.6 | 26.2 | 23.4 | 42.1 | 28.3 | 19.3 |
| %Elongation MD | 650 | 700 | 700 | 750 | 800 | 700 |
| TD | 800 | 650 | 650 | 900 | 700 | 650 |
| Tear, g/micron MD | 3 | 4 | 4.4 | 8.8 | 4 | 4.6 |
| TD | 12 | 4.4 | 4 | 17.6 | 4.6 | 4.8 |
| Dart Impact, cm-Kg/micron | 0.69 | 0.83 | 0.88 | 0.92 | 0.83 | 0.83 |
| Stiffness, Mpa MD | 614 | 690 | 648 | 476 | 641 | 648 |
| TD | 545 | 559 | 586 | 345 | 545 | 593 |

The data in Table III reveals that processing by the present invention improves the physical properties of the film for film thicknesses 100 and 200 microns. Heat transfer limitations encountered in the thicker films somewhat limited the effects of the present invention on the properties of those films.

Additional tests have been conducted to compare the effects of processing on film clarity. The resin samples below were processed by the present invention or by a conventional 3 roll stack of metal (chrome) rolls such as that used in metal calendering. Table IV presents the comparisons:

TABLE IV

| Film | Film thickness (microns) | % Haze | | Gloss (60°) |
|---|---|---|---|---|
| | | 3 Roll stack | Glossy silicone/ metal | |
| C | 100 | Not Possible | 7 | 96/97* |
| | 200 | 15 | 10 | 66/82 |
| | 300 | 20 | 14 | 60/62 |
| D | 100 | Not Possible | 4 | |
| | 200 | 8 | 4 | |
| | 300 | 10 | 6 | |

* Si rubber side/chromed chill roll side

Thin gauge film of uniform clarity could not be produced on the 3-roll stack. The above gloss data was based on samples produced using a mirror finish silicone rubber coated roller having a Shore A hardness of 78. Additional tests using a dull silicone rubber coating (Shore A hardness 64) resulted in Gloss (60°) ranging from 7/57 to 18/80 for the 3 C films.

The glossy silicone rubber coated rolls improved the film clarity for each thickness. It is significant to note that these improved results were obtained at line speeds of 11.3—13.3 meters per minute (mpm) as compared to 3.3—5.0 mpm for the 3 roll stack arrangement.

While it is of course preferred that the composite films of this invention be prepared using the aforedescribed polished silicone rolls, it is not essential to do so where the film is used to package liquids. So long as a polished metal chill roll is used as one of the rolls, the rubber roll can be a conventional uncoated or matte finish rubber roll. In that event, however, the composite film must be utilized in making the medical container bags of this invention so that the surface which was in contact with the rubber roll is the internal surface of the bag. When filled with liquid, haze due to the rough (rubber roll contacted) surface is eliminated as a result of fluid filling the textured surface and eliminating the light scatter which causes haze.

In one embodiment of the invention, the composite film of this invention is produced by extruding a "rod" of core material comprising the rubber composition, passing it through a manifold and extruding a skin layer of polyolefin over the core and subsequently flattening the coated "rod" into a sheet using a coat hanger die. This flattened sheet is then passed through the nip formed between a rubber roll and a polished metal chill roll. The resulting product is a "sandwich" of rubber core encased in a polyolefin "skin". A schematic of this extrusion process is shown in Figure I.

The advantage of the instant invention may be more readily appreciated by reference to the following examples.

Examples 1—8

Film composites were prepared using the formulations shown in Table V. Their physical properties are shown in Table VI. In general, the clarity of each sheet was very good. The haze was particularly low (5.3%), as in Example 3, where the elastomer component of the core was Vistalon 1721, an EPDM having a 15 Mooney (1+8 @ 127°C) and 80 wt% ethylene content. While the PIB composition (Example 7) showed a relatively high haze, when a bag was prepared from this composition with the rubber roll contacted surface facing inward and the bag filled with water, the bag exhibited outstanding contact clarity and very high gloss. Hence, when care is taken to use the film composite as described above, where only one surface of the composite contributes to the high haze, even haze levels in excess of 25% can be tolerated. Such is not the case where both surfaces of the composite are par in smoothness.

The film compositions wherein the core was comprised of rubber alone, Examples 3, 4 and 5 had the greatest flexibility. Nonetheless, the composite films of Examples 6 and 7 (cores containing butyl rubber and PIB respectively), were significantly less stiff than the other films, even in the case of Example 8 where no skin was used. The composite of Example 7 (PIB) had superior water vapor barrier properties as compared to the other films. The cores containing butyl and PIB had exceptional tear resistance. This is surprising since these uncured rubbers exhibit cold flow in the gum state and have poor physical properties when used as such.

In order to determine the autoclavability of the films, bags were prepared of each of the films, filled with water, heat sealed and autoclaved at 117°C for 60 minutes. The containers were cooled overnight at 275 kPa air overpressure. The results are shown in Table VII. The bags made from film wherein the core material was rubber alone (Examples 3—5) exhibited excessive shrinkage and ruptured. While the PIB containing core (Example 7) initially showed a greater initial blush than other films, this blush cleared completely in 6—7 days. Apparently, this is the time required for moisture absorbed by the film to diffuse to the surface again. While plasticized PVC turns very white when autoclaved, it clears within hours because of its high water vapor transmission rate.

Examples 9—20

Nominal 200 micron composite films were prepared by conventional co-extrusion. The equipment used comprised a main 65 mm extruder for the core material and one 37.5 mm extruder for the film skin. The flow from the 37.5 mm extruder was split to form skins on each face of the elastomer film. Composites of the A/B and A/B/A type were prepared wherein A represents the polyolefin skin and B represents the rubber containing core material. The films were extruded through a set of nip rolls comprising a matte finish silicone rubber roll (55 Shore A) and a polished chrome chill roll. The surface of the film composite intended to be heat sealed to form the inner surface of the bag was placed against the silicone roll of the 3-roll stack and consequently had a matte finish which was the source of most of the observed haze. The formulations are shown in Table VIII and the structure of the film is described in Table IX. Reference to embossing relates to whether or not silicone rubber contact pressure was used. No embossing indicates that an air knife rather than the rubber roll was used as an assist in contacting the film with the metal roll. The film properties are listed in Table X.

Referring to Table X, it is apparent that covering the EPM/RCPP composition with a layer of LLDPE has little effect on the mechanical properties of the composition (Examples 9 and 10). Surprisingly, clarity is reduced, but this is due in part to material which bloomed to the surface of the LLDPE. Clarity improved significantly when the rubber roll was raised, eliminating embossing of the film surface with the matte finish of the roll. (Examples 10 and 11). Further improvements in clarity are achieved by forming a sandwich type A/B/A laminate with the EPM composition and LLDPE (Examples 12 or 13 compared to 11). Haze is reduced somewhat and gloss substantially increased in the A/B compositions when the PPRC is placed in contact with the chill roll (compare Examples 14 and 15).

Monolayer "F" is a softer, tougher (tear/dart drop) film than the monolayer "E" film composition. The softness, outstanding water impermeability and excellent toughness of the A/B/A composite film using RCPP as the skin and a PIB/RCPP core suggest that it is a useful film material for parenteral drug use (Examples 19 and 20). Relative to the EPM compositions, this material has about a 35% better WVTR and 50% greater flexibility. The "hand" of the water filled bags was similar to that of PVC. This film neither tore in the Elmendorf tear tester nor ruptured in the dart test. Adequate clarity can be achieved by replacing the matte finish of the rubber roll with a silicone polished rubber roll. As can be seen from a comparison of runs

9

19 and 20, a substantial amount of the haze is a result of embossing of the matte finish cut of the film.

While the films of this invention have particular utility in parenteral drug container use, it will be evident from the aforegoing disclosure that the compositions can be used in any food application. For example, the aforedescribed A/B/A polyolefin-rubber composition core laminate can be overlayered with a polyvinylidene chloride film on one surface, using a polyurethane adhesive tie layer to give the film greater impermeability to oxygen. This PVDC coated film can be used as a wrapping for "canless" meats, e.g., ham, since the cooking of the meats can be accomplished after the meat is packaged. This oxygen impermeable film also will find application as containers for oxygen sensitive parenteral or enteral drugs.

In one embodiment of this invention the PVDC can be co-extruded with the core layer to form one surface of an A/B/C composite film. For example, the film structure can comprise one skin of PVDC, another of RCPP, sandwiching a core of rubber composition wherein the rubber is a halogenated rubber or a blend of unhalogenated and halogenated rubbers. The halogenated rubber can be halogenated butyl rubber or polychloroprene. Preferably the rubber comprises about 40 to 60 wt% PIB, about 20 to 40 wt% of butyl rubber and about 20 to 40 wt% of polychloroprene. The co-extrusion can be accomplished with unhalogenated rubbers by using a tie layer between the PVDC and the rubber core.

While haze is an important criterion for determining the usefulness of a film for parenteral drug use, it is apparent that the important haze value is that for internal haze. The elastomeric compositions of this invention have internal haze values of 30% or less. They can be used to prepare useful films having adequate clarity so long as at least one surface of the film has a 45° gloss of at least 40, preferably at least 50, more preferably at least 60, most preferably at least 75. The parenteral drug pouch must be manufactured using the film so that the surface having the lower gloss forms the inside of the pouch so that it will be in contact with the drug fluid. Preferably at least one surface of the film has a gloss of at least 60, more preferably at least 75 as measured at 45° reflected light.

HDPE cannot be used for blending with the elastomer component since it forms compositions with high internal haze. EVA or LDPE cannot be used as the polyolefin component of the rubber olefin blend except in conjunction with at least 15 wt% of PP or RCPP which is required for dimensional thermal stability of the film.

In order to achieve the desired gloss, the film must be brought into contact with the chill roll using the rubber roll (matte or polished). Otherwise there is insufficient contact with the roll to generate the high gloss surface. Air knives of the prior art are inadequate to cause the necessary roll contact.

In a preferred embodiment where the polyolefin is PP or RCPP, the skin surface which is the inside of the pouch, and hence the heat sealed surface, comprises a minor amount of ethylene-vinyl acetate copolymer to improve heat sealing characteristics of the PP or RCPP. The ethylene-vinyl acetate copolymer can comprise about 5 to 40 wt% of the film. However, in a preferred embodiment, the PP or RCPP will comprise about 15 to about 85 wt% of the polyolefin ethylene-vinyl acetate blend.

It will be evident from the foregoing disclosure that each of the polyolefin layers of the composite film can comprise the same or different polyolefin. Further, the polyolefin layers can be blends of polyolefins, e.g., PP/LLDPE; RCPP/LDPE; RCPP/ethylene-vinyl acetate copolymer, etc.

With reference to the metal chill rolls used in the practice of this invention the term "highly polished" means that the roll surface has a root mean square (RMS) of less than 4 microns.

By reference to the foregoing disclosure, it will be evident to those skilled in the art that composite films described herein will have utility, even where they are not transparent, because of their high burst strength and water vapor barrier properties as well as their heat resistance in retorting.

While in the past PVDC has been the oxygen barrier film of choice, more recently ethylene-vinyl alcohol copolymers have been used as oxygen barrier copolymers. It is within the scope of this invention to utilize ethylene-vinyl alcohol copolymers as the skin layer of the composite films of this invention with or without an adhesive tie layer. Additionally, the ethylene-vinyl alcohol (EVOH) copolymers may be utilized as an overlayer adhered to the skin of the composite film by an adhesive tie layer.

Where transparency is not a requirement of the film for a particular use, overlayers other than polyolefins can be utilized to achieve beneficial results. For example, paper or metal foil, e.g., aluminum, copper, etc., can be adhered to the composite film by use of an adhesive tie layer. Such metal foil compositions will have enhanced oxygen and water vapor barrier properties.

The composite films of this invention have a wide range of applications for packaging both solids and liquids. For example, they can be used to prepare containers for fruit juices which can be aseptically packaged. The juices can be pasteurized after packaging. Solid materials, e.g., drugs, reactive chemicals, etc., which need to be protected from air or water can also be advantageously packaged in containers made from the composite films of this invention.

The term "retort pouch" as used in the specifications means a container for liquids or solids which can be autoclaved for sterilization, pasteurization or cooking without damage to the pouch. As used with respect to the skin of the composite film the term "polyolefin" includes EVOH.

In preparing retort pouches and other containers from the composite films of this invention, two sheets of film can be adhesively bonded or heat sealed together to form the pouch or container. Where the pouch or container is to be subjected to heat, e.g., sterilization, the pouch or other container is preferably formed by heat sealing.

In another embodiment the composite film can be coextruded in tubular form and the pouch or bag formed therefrom. In a particular embodiment, the tubular composite film can be placed in a mold and blow-moulded into the desired bag, pouch or container form.

Enteral feeding bags, blood bags, parental drug bags and the like can have valves or outlet fittings molded or bonded into the bag or pouch structure.

### TABLE V
### Co-extruded sheet structures

| Example # | 1 | 2 | 3 | 4 | 5 | 6 | 7 | 8 |
|---|---|---|---|---|---|---|---|---|
| Layer[1] | | | | | | | | |
| Skin | PPRC | HDPE | PP | HDPE | PPRC | PPRC | PPRC | None |
| Core | (a) | V-1721/PPRC | V-1721 | V-1721 | V-1721 | (b) | (c) | (d) |
| Skin | PPRC | HDPE | PP | HDPE | PPRC | PPRC | PPRC | None |
| Total Avg. Gauge microns | 275 | 245 | 250 | 290 | 280 | 198 | 290 | 278 |
| Calc. Gauge. Microns[2] | | | | | | | | |
| Skin | 25 | 28 | 23 | 10 | 25 | 23 | 35 | — |
| Core | 225 | 190 | 205 | 270 | 225 | 153 | 220 | 278 |
| Skin | 25 | 28 | 23 | 10 | 25 | 23 | 35 | — |

[1] Raw Materials:
PPRC—4.0 MFR
HDPE—6.0 MI, 0.960 g/cc
PP—4.0 MFR
(a)—70/30 V-1721/PPRC—Dry Blend of Pelletized V-1721 (ca 0.32 mm pellets) and PPRC
(b)—50/50 Homo PP/Butyl 077 intensively mixed
(c)—65/35 VISTANEX L-100/PP (4.0 MFR) intensively mixed
(d)—70/30 PPRC/V-1721 intensively mixed
Note: No adhesive tie layer was applied between layers.
[2] Based on extruder output rate, sheet width, line speed and density.

### TABLE VI
#### Properties of co-extruded sheets

| Example # | 1 | 2 | 3 | 4 | 5 | 6 | 7 | 8 |
|---|---|---|---|---|---|---|---|---|
| Avg. Gauge, microns | 275 | 245 | 250 | 290 | 280 | 198 | 290 | 278 |
| **Tensile Strength, MPa** | | | | | | | | |
| @ Yield MD | 11.7 | 6.4 | 3.2 | 3.6 | 7.1 | 20.4 | 9.5 | 16.3 |
| TD | 7.1 | 5.1 | 2.9 | 2.5 | 2.8 | 8.3 | 4.6 | 18.9 |
| @ Break MD | 25.9 | 17.2 | 7.8 | 15.2 | 10.6 | 18.7 | 16.0 | 26.2 |
| TD | 15.5 | 14.7 | 10.6 | 8.8 | 9.8 | 13.2 | 11.5 | 11.6 |
| **Elongation, %** | | | | | | | | |
| @ Yield MD | 36 | 26 | 37 | 44 | 34 | 14 | 29 | 16 |
| TD | 20 | 28 | 25 | 26 | 20 | 15 | 20 | 15 |
| @ Break MD | 550 | 780 | 530 | 415 | — | 590 | 415 | 575 |
| TD | 815 | 800 | 790 | 865 | 850 | 590 | 580 | 335 |
| **1% Secant Modulus, MPa** | | | | | | | | |
| MD | 313.8 | 223.4 | 88.3 | 49.7 | 95.2 | 332.4 | 324.8 | 566.9 |
| **Elmendorf Tear, g/micron** | | | | | | | | |
| MD | 1.8 | 7.3 | 2.0 | 4.3 | 2.4 | 9.0 | 6.0 | 1.0 |
| TD | NT[1] | 8.9 | 6.0 | 7.8 | 4.6 | 5.0 | NT[1] | 7.2 |
| Haze, % | 9.6 | 10.6 | 5.3 | 9.9 | 10.3 | 19.0 | 26.2 | 6.5 |
| WVTR at 37.8°C, 90% RH, g/m²/day | 2.1 | 2.7 | — | — | — | — | 0.8 | 1.8 |

[1] NT—No Tear

TABLE VII
Autoclavability results

| Example | 1 | 2 | 3 | 4 | 5 | 6 | 7 | 8 |
|---|---|---|---|---|---|---|---|---|
| Vx/HDPE Overwrap[2] | | | | | | | | |
| Inner Bag Rupture | No | No | Yes[1] | Yes[1] | Yes[1] | No | No | No |
| Sticking to Overwrap | No | Slight | Some | Some | — | No | No | Slight |
| Clarity | Good | Fair | Whitening | Hazy | Whitening | Good | Excellent | Good |
| No Overwrap[3] | | | | | | | | |
| Bag Rupture | No | No | Yes[1] | Yes[1] | Yes[1] | No | No | No |
| Blushing | Yes | Yes | — | — | — | Yes | Yes | Yes |
| Days to Clear | 3—4 | 3—4 | — | — | — | — | 6—7 | 3—4 |
| Ultimate Clarity | Good | Good | — | — | — | V. Good | Excellent | V. Good |

[1] Excessive shrinkage.
[2] Commercially available PIB/HDPE (30/70) blend used as water vapor barrier overwrap.
[3] Submerged in water during autoclave cycle.

TABLE VIII
Description of resins

| Resin/Use | Composition | | MFR[1]<br>@ 230C | Other comments |
|---|---|---|---|---|
| **Coextrusion Core** | | | | |
| C | EPM | 42.5% | 1.8 | 50 ML(1+8)127C, 76% $C_2^=$ |
| | LLDPE A | 15.0 | | 1 MI, 0.918 g/cc |
| | PPRC A | 42.5 | | 4 MFR (Condition L) |
| D | PIB | 64.9 | 0.34 | $M_v$=1,200,000 |
| | PPRC B | 34.9 | | 3 MFR |
| **Coextrusion Skin** | | | | |
| LLDPE B | | | 2.7 | 0.935 Density, 126°C MP (peak) |
| PPRC C | Random PPRC<br>(4-1/4% $C_2^=$) | | 6.4 | 129°C MP(peak) |
| PPRC D | Random PPRC<br>(4-1/4% $C_2^=$) | | 1.2 | 128°C MP(peak) |
| **Monolayer** | | | | |
| E | PIB | 39.6% | 1.0 | $M_v$=1,200,000 |
| | PPRC B | 59.4 | | 3 MFR |
| | Irganox 1076 | 0.12 | | |
| | Syloid 221 | 0.7 | | |
| | Armoslip EXP | 0.2 | | |
| F | PIB | 40.0% | 0.48 | $M_v$=1,200,000 |
| | LLDPE A | 14.0 | | 1 MI, 0.918 g/cc |
| | PPRC E | 45.0 | | 3 MFR |
| | Sandostab P-EPQ | 0.18 | | |
| | Syloid 221 | 0.7 | | |
| | Armoslip EXP | 0.2 | | |
| G | IIR | 40.3 | | 48 ML(1+8)125C, 0.8% unsaturation |
| | PP | 59.7 | | 4 MFR |
| | Irganox 1076 | 0.12 | | |
| | Syloid 221 | 0.7 | | |
| | Armoslip EXP | 0.2 | | |

[1]—MFR of total composition

TABLE IX
Structure of monolayer and coextruded films

| Example | 9 | 10 | 11 | 12 | 13 | 14 |
|---|---|---|---|---|---|---|
| Coextrusion | No | Yes | Yes | Yes | Yes | Yes |
| Embossed | Yes | Yes | No | No | No | Yes |
| Layer[1] | | | | | | |
| A Upper | — | LLDPE | LLDPE | LLDPE | LLDPE | C |
| B | C | C | C | C | C | PPRC C |
| A Lower | — | — | — | LLDPE | LLDPE | — |
| Nominal Gauge[2]—microns | | | | | | |
| A Upper | — | 20—15 | 20—25 | 10—12.5 | 20—25 | 162.5—185 |
| B | 175—200 | 155—175 | 155—175 | 155—175 | 135—150 | 12.5—15 |
| A Lower | — | — | — | 10—12.5 | 20—25 | — |
| Distribution[2]—% | | | | | | |
| A Upper | — | 12.1 | 12.1 | 6.0 | 11.1 | 92.4 |
| B | 100 | 87.9 | 87.9 | 88.0 | 77.8 | 7.6 |
| A Lower | — | — | — | 6.0 | 11.1 | — |

[1] The A upper layer was placed adjacent to the top, matte finish silicone rubber roll.
The A lower or B layer, depending on the type of extrusion, was placed adjacent to the chrome finish chill roll.

[2] Based on measured extruder output rates:

| | |
|---|---|
| C | 0.71 kg/hr/RPM (Main Extruder) |
| LLDPE | 0.24 kg/hr/RPM (Satellite Extruder) |
| PPRC C | 0.12 kg/hr/RPM (Satellite Extruder) |
| D | 0.65 kg/hr/RPM (Main Extruder) |
| PPRC D | 0.11 kg/hr/RPM (Satellite Extruder) |

TABLE IX (Cont'd)
Structure of monolayer and coextruded films

| Example | 15 | 16 | 17 | 18 | 19 | 20 |
|---|---|---|---|---|---|---|
| Coextrusion | Yes | No | No | Yes | Yes | Yes |
| Embossed | Yes | Yes | Yes | Yes | No | Yes |
| Layer[1] | | | | | | |
| A Upper | PPRC C | — | — | F | PPRC D | PPRC D |
| B | C | E | F | PPRC C | D | D |
| A Lower | — | — | — | — | PPRC D | PPRC D |
| Nominal Gauge[2]—microns | | | | | | |
| A Upper | 12.5—15 | — | — | 162.5—185 | 12.5—15 | 12.5—15 |
| B | 162.5—185 | 175—200 | 175—200 | 12.5—15 | 150—170 | 150—170 |
| A Lower | — | — | — | — | 12.5—15 | 12.5—15 |
| Distribution[2]—% | | | | | | |
| A Upper | 7.8 | — | — | 92.4 | 7.4 | 7.4 |
| B | 92.2 | 100 | 100 | 7.6 | 85.2 | 85.2 |
| A Lower | — | — | — | — | 7.4 | 7.4 |

[1] The A upper layer was placed adjacent to the top, matte finish silicone rubber roll.
The A lower or B layer, depending on the type of extrusion, was placed adjacent to the chrome finish chill roll.

[2] Based on measured extruder output rates:

| | |
|---|---|
| C | 0.71 kg/hr/RPM (Main Extruder) |
| LLDPE | 0.24 kg/hr/RPM (Satellite Extruder) |
| PPRC C | 0.12 kg/hr/RPM (Satellite Extruder) |
| D | 0.65 kg/hr/RPM (Main Extruder) |
| PPRC D | 0.11 kg/hr/RPM (Satellite Extruder) |

TABLE X
Properties of monolayer and coextruded films

| Example | 9 | 10 | 11 | 12 | 13 | 14 | 15 | 16 | 17 | 18 | 19 | 20 |
|---|---|---|---|---|---|---|---|---|---|---|---|---|
| Layer—A | — | LLDPE | LLDPE | LLDPE | LLDPE | C | PPRC C | — | — | F | PPRC D | PPRC D |
| B | C | C | C | C | C | PPRC C | C | E | F | PPRC C | D | D |
| A | — | — | — | LLDPE | LLDPE | — | — | — | — | — | PPRC D | PPRC D |
| Embossed | Yes | Yes | No | No | No | Yes | Yes | Yes | Yes | Yes | No | Yes |
| Avg. Gauge, microns | 180 | 185 | 208 | 210 | 210 | 185 | 185 | 175 | 198 | 203 | 193 | 195 |
| Tensile Strength, MPa | | | | | | | | | | | | |
| Yield MD | 10.7 | 10.1 | 9.8 | 9.3 | 8.9 | 9.9 | 11.2 | 11.8 | 9.2 | 8.8 | 5.8 | 5.4 |
| TD | 9.3 | 9.5 | 8.8 | 8.1 | 7.6 | 8.7 | 9.7 | 8.7 | 7.3 | 6.9 | 3.7 | 3.4 |
| Break MD | 38.7 | 35.6 | 31.6 | 53.4 | 29.9 | 36.4 | 35.5 | 22.2 | 23.3 | 25.6 | 14.1 | 14.0 |
| TD | 29.6 | 29.6 | 29.2 | 28.3 | 28.3 | 30.3 | 29.4 | 18.0 | 19.3 | 19.3 | 14.2 | 13.8 |
| Elongation, % | | | | | | | | | | | | |
| Yield MD | 25 | 20 | 22 | 25 | 20 | 20 | 20 | 15 | 15 | 15 | 15 | 20 |
| TD | 20 | 25 | 25 | 20 | 20 | 25 | 20 | 10 | 20 | 15 | 15 | 15 |
| Break MD | 770 | 775 | 805 | 875 | 815 | 820 | 760 | 770 | 780 | 800 | 670 | 675 |
| TD | 910 | 910 | 920 | 930 | 955 | 925 | 920 | 790 | 805 | 840 | 765 | 770 |

EP 0 165 791 B1

TABLE X (Cont'd)
Properties of monolayer and coextruded films

| Example | 9 | 10 | 11 | 12 | 13 | 14 | 15 | 16 | 17 | 18 | 19 | 20 |
|---|---|---|---|---|---|---|---|---|---|---|---|---|
| 1% Secant Modulus, MPa | | | | | | | | | | | | |
| MD | 193.8 | 205.5 | 206.8 | 193.1 | 120.7 | 179.3 | 205.5 | 256.6 | 196.6 | 166.2 | 131.0 | 124.1 |
| TD | 174.5 | 179.3 | 173.8 | 156.6 | 153.1 | 162.8 | 191.7 | 222.1 | 145.5 | 137.9 | 57.9 | 56.6 |
| Elmendorf Tear, g/micron | | | | | | | | | | | | |
| MD | 7.0 | 6.4 | 9.4 | 7.4 | 8.1 | 8.8 | 6.4 | 12.1 | 13.2 | 14.2 | 13.1 | NB |
| TD | 12.6 | 13.0 | 10.1 | 9.9 | 10.3 | 15.4 | 12.1 | 15.4 | 16.6 | 15.4 | NB[1] | NB |
| Dart Drop Impact | | | | | | | | | | | | |
| TEDD, | 0.72 | 0.74 | 0.77 | 0.71 | 0.74 | 0.98 | 0.71 | 1.21 | 1.46 | NB | NB | NB |
| Haze, % | | | | | | | | | | | | |
| — in Air | 85.6 | 92.9 | 34.3 | 4.6 | 4.6 | 80.3 | 77.0 | 95.2 | 96.0 | 91.3 | 40.2 | 80.8 |
| — in Water | 36.6 | 52.6 | 6.2 | 4.5 | 4.0 | 32.0 | 27.4 | 58.7 | 68.0 | 52.6 | 25.4 | 33.8 |
| Gloss | | | | | | | | | | | | |
| — Side 1 | 40.6 | 46.0 | 24.3 | 75.4 | 80.7 | 35.6 | 41.7 | 27.8 | 21.4 | 41.4 | 21.4 | 46.4 |
| — Side 2 | 4.1 | 3.3 | 52.2 | 74.5 | 80.9 | 3.7 | 4.7 | 3.9 | 3.8 | 4.1 | 15.2 | 5.1 |
| WVTR @ 37.8C, 100% RH | | | | | | | | | | | | |
| g/m²/day | 3.4 | 3.25 | 3.1 | 2.9 | 3.05 | 3.5 | 3.7 | 2.35 | 2.3 | 2.1 | 1.95 | 1.95 |
| @ microns | 182.5 | 175 | 180 | 210 | 180 | 182.5 | 182.5 | 170 | 195 | 212.5 | 200 | 195 |

[1] NB=No Break

## EP 0 165 791 B1

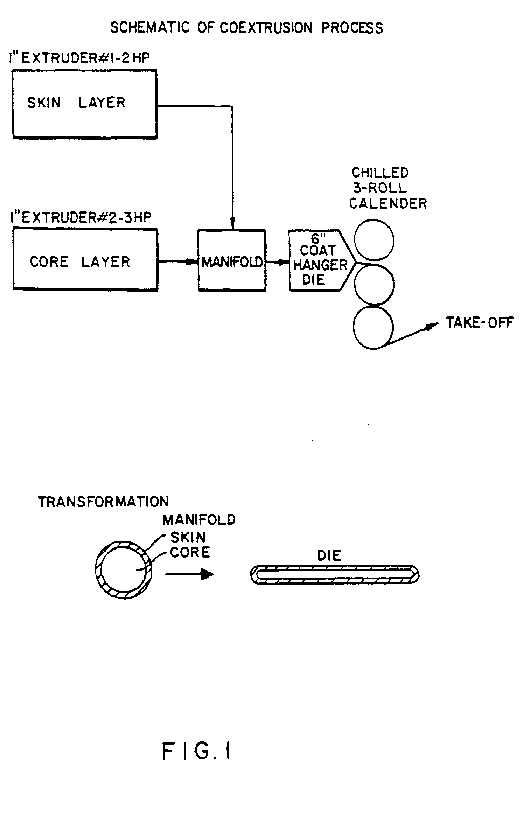

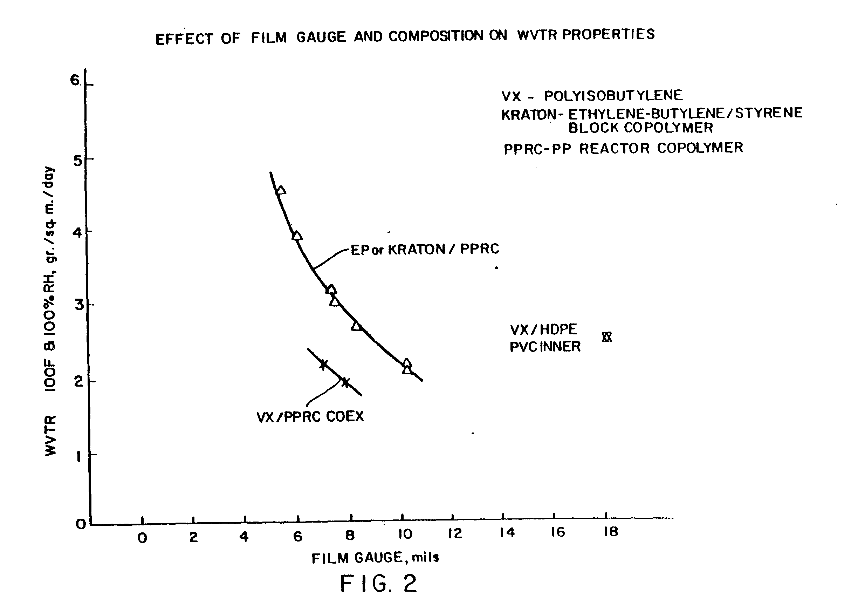

**Claims**

1. A composite film comprising a rubber containing core component and at least one skin layer comprising a polyolefin resin characterised in that the rubber containing core component comprises from 50 wt% to 85 wt% of rubber selected from PIB, butyl rubber, EPM, EPDM, halogenated butyl rubber or polychloroprene, and from 15 to 50 wt% of a polyolefin,

2. The composite film according to claim 1 wherein the polyolefin skin layer is polypropylene, RCPP, HDPE, LLDPE, polybutene-1 or mixtures thereof.

3. The composite film according to claim 1 or 2 wherein the rubber core component comprises from 55 to 70 wt% of rubber and from 30 to 45 wt% of a polyolefin.

4. The composite film according to claim 1 or 2 wherein the rubber core component comprises from 60 to 85 wt% of rubber and from 15 to 40 wt% of a polyolefin.

5. The composite film according to claim 1, 2, 3 or 4 wherein the film comprises a sandwich construction of two polyolefin skins having an inner rubber-containing core component.

6. The composite film according to any one of claims 1—5 wherein the rubber-containing core component comprises a blend of PIB with PP or RCPP polyolefin.

7. The composite film according to any one of claims 1—6 wherein at least one skin layer has a 45° gloss of at least 50, preferably at least 60 and more preferably at least 75.

8. The composite film according to claim 1 wherein the polyolefin skin layer comprises PVDC or EVOH.

9. The composite film according to any one of claims having at least one overlayer bonded to at least one skin layer.

10. The composite film according to claim 9 wherein the overlayer is bonded to the skin layer using an adhesive tie layer.

11. The composite film according to claim 9 or 10 wherein the overlayer comprises a polyolefin film comprising PVDC or EVOH.

12. The composite film according to claim 9 or 10 wherein the overlayer comprises a metal foil preferably aluminium or copper.

13. The composite film according to claim 5 or any one of claims 6—12 when dependent on claim 5 wherein one polyolefin skin comprises a different polyolefin than the other polyolefin skin.

14. The composite film according to claim 13 wherein one polyolefin skin comprises PP or RCPP and the other polyolefin skin comprises PVDC.

15. The composite film according to claim 14 wherein the rubber comprises at least one halogenated rubber.

16. The composite film according to claim 14 or 15 wherein the PVDC is tied to the rubber composition by a tie layer.

17. The composite film according to claim 16 wherein the tie layer is a polyurethane adhesive.

18. The composite film according to claim 5 or any one of claims 6—13 when dependent on claim 5 wherein the polyolefin skins comprise a polyolefin other than PVDC and at least one of said polyolefin skins is over-layered by a film of PVDC adhered thereto.

19. A process for preparing a composite film which comprises:

a) co-extruding a molten composition comprising a first co-extruded layer and at least one second co-extruded layer wherein the first co-extruded layer is a rubber containing composition comprising from 50 to 85 wt% rubber and the second co-extruded layer comprises a polyolefin thereby forming a web of a composite film of said first and second co-extruded layers;

b) passing the web at a temperature above its softening point through the nip of two counterrotating rollers, one of said rolls being a first highly polished metal chill roll and a second roller being a resilient roller;

c) cooling the blend to produce a composite film having at least one surface with a 45° gloss of at least 40.

20. The process according to claim 19 wherein the surface 45° gloss is at least 50.

21. The process according to claim 19 or 20 wherein the second roller is a resilient roller having a highly glossy rubber surface.

22. The process according to claim 19, 20 or 21 wherein the composite film comprises two second co-extruded layers having sandwiched between the two second co-extruded layers the first co-extruded layer.

23. The process according to claim 22 wherein each second layer comprises the same polyolefin resin.

24. The process according to claim 22 wherein one second co-extruded layer comprises a different polyolefin than the other second layer.

25. The process according to claim 24 wherein one second co-extruded layer is PP or RCPP and the other is PVDC.

26. The process according to claim 25 wherein a tie layer is used between PVDC and the rubber composition.

27. The process according to claim 26 wherein the tie layer is a polyurethane adhesive.

28. The process according to any one of claims 19—27 wherein the first co-extruded layer comprises from 65 to 85 wt% rubber and from 15 to 35 wt% polyolefin.

29. The process according to any one of claims 19—28 wherein the rubber is PIB, butyl rubber, halogenated butyl rubber, EPM, EPDM or polychloroprene, and the polyolefin is PP or RCPP.

30. A container for liquids and solids comprising a pouch formed from a composite film prepared according to the process of any one of claims 19—29, or from a composite film according to any one of claims 1—18.

31. A container according to claim 30 adapted for or when containing blood or a parenteral drug solution.

**Patentansprüche**

1. Verbundfolie, die eine Kautschuk enthaltende Kernkomponente und mindestens eine ein Polyolefinharz enthaltende Außenschicht umfaßt, dadurch gekennzeichnet, daß die Kautschuk enthaltende Kernkomponente 50 bis 85 Gew.% Kautschuk ausgewählt aus PIB, Butylkautschuk, EPM, EPDM, halogeniertem Butylkautschuk oder Polychloropren und 15 bis 50 Gew.% eines Polyolefins enthält.

2. Verbundfolie nach Anspruch 1, bei der die Polyolefin-Außenschicht Polypropylen, RCPP, HDPE, LLDPE, Polybuten-1 oder Mischungen derselben ist.

3. Verbundfolie nach Anspruch 1 oder 2, bei der die Kautschukkernkomponente 55 bis 70 Gew.% Kautschuk und 30 bis 45 Gew.% eines Polyolefins enthält.

4. Verbundfolie nach Anspruch 1 oder 2, bei der die Kautschukkernkomponente 60 bis 85 Gew.% Kautschuk und 15 bis 40 Gew.% eines Polyolefins enthält.

5. Verbundfolie nach Anspruch 1, 2, 3 oder 4, bei der die Folie einen Sandwich-Aufbau aus zwei Polyolefin-Außenschichten mit einer inneren Kautschuk enthaltenden Kernkomponente aufweist.

6. Verbundfolie nach einem der vorangehenden Ansprüche, bei der die Kautschuk enthaltende Kernkomponente eine Mischung aus PIB mit PP- oder RCPP-Polyolefin umfaßt.

7. Verbundfolie nach einem der vorangehenden Ansprüche, bei der mindestens eine Außenschicht einen 45°-Glanz von mindestens 50, vorzugsweise mindestens 60 und insbesondere mindestens 75 besitzt.

8. Verbundfolie nach Anspruch 1, bei der die Polyolefin-Außenschicht PVDC oder EVOH umfaßt.

9. Verbundfolie nach einem der vorangehenden Ansprüche mit mindestens einer an mindestens eine Außenschicht gebundenen Deckschicht.

10. Verbundfolie nach Anspruch 9, bei der die Deckschicht unter Verwendung einer Klebstoffverbindungsschicht an die Außenschicht gebunden ist.

11. Verbundfolie nach Anspruch 9 oder 10, bei der die Deckschicht eine PVDC oder EVOH umfassende Polyolefinfolie umfaßt.

12. Verbundfolie nach Anspruch 9 oder 10, bei der die Deckschicht eine Metallfolie, vorzugsweise Aluminium oder Kupfer, umfaßt.

13. Verbundfolie nach Anspruch 5 oder einem der Ansprüche 6 bis 12 sofern auf Anspruch 5 zurückbezogen, bei der die eine Polyolefin-Außenschicht ein anderes Polyolefin als die andere umfaßt.

14. Verbundfolie nach Anspruch 13, bei der eine Polyolefinaußenschicht PP oder RCPP und die andere Polyolefinaußenschicht PVDC umfaßt.

15. Verbundfolie nach Anspruch 14, bei der der Kautschuk mindestens einen halogenierten Kautschuk umfaßt.

16. Verbundfolie nach Anspruch 14 oder 15, bei der das PVDC mittels einer Verbindungsschicht mit der Kautschukzusammensetzung verbunden ist.

17. Verbundfolie nach Anspruch 16, bei der die Verbindungsschicht ein Polyurethanklebstoff ist.

18. Verbundfolie nach Anspruch 5 oder einem der Ansprüche 6 bis 13 sofern auf Anspruch 5 zurückbezogen, bei der die Polyolefin-Außenschichten ein anderes Polyolefin als PVDC umfassen und mindestens eine der Polyolefin-Außenschichten von einer daran gebundenen Folie aus PVDC überlagert ist.

19. Verfahren zur Herstellung einer Verbundfolie, bei dem:

(a) eine geschmolzene Zusammensetzung coextrudiert wird, die eine erste coextrudierte Schicht und mindestens eine zweite coextrudierte Schicht umfaßt, wobei die erste coextrudierte Schicht eine Kautschuk enthaltende Zusammensetzung ist, die 50 bis 85 Gew.% Kautschuk enthält, und die zweite coextrudierte Schicht ein Polyolefin umfaßt, und dadurch eine Bahn einer Verbundfolie aus der ersten und der zweiten coextrudierten Schicht gebildet wird;

(b) die Bahn bei einer Temperatur über ihrem Erweichungspunkt durch den Spalt von zwei entgegengesetzt rotierenden Walzen geleitet wird, wobei eine der Walzen eine erste hochpolierte Metallkühlwalze und eine zweite Walze eine elastische Walze ist; und

(c) die Mischung gekühlt wird, um eine Verbundfolie mit mindestens einer Oberfläche mit einem 45°-Glanz von mindestens 40 herzustellen.

20. Verfahren nach Anspruch 19, bei dem der 45°-Glanz der Oberfläche mindestens 50 beträgt.

21. Verfahren nach Anspruch 19 oder 20, bei dem die zweite Walze eine elastische Walze mit einer hochglänzenden Kautschukoberfläche ist.

22. Verfahren nach Anspruch 19, 20 oder 21, bei dem die Verbundfolie zwei zweite coextrudierte Schichten umfaßt, wobei die erste coextrudierte Schicht zwischen den beiden zweiten coextrudierten Schichten angeordnet ist.

23. Verfahren nach Anspruch 22, bei dem jede zweite Schicht das gleiche Polyolefinharz umfaßt.

24. Verfahren nach Anspruch 22, bei dem eine zweite coextrudierte Schicht ein anderes Polyolefin als die andere zweite Schicht umfaßt.

25. Verfahren nach Anspruch 24, bei dem eine zweite coextrudierte Schicht PP oder RCPP ist und die andere PVDC ist.

26. Verfahren nach Anspruch 25, bei dem eine Verbindungsschicht zwischen PVDC und der Kautschukzusammensetzung verwendet wird.

27. Verfahren nach Anspruch 26, bei dem die Verbindungsschicht ein Polyurethanklebstoff ist.

28. Verfahren nach einem der Ansprüche 19 bis 27, bei dem die erste coextrudierte Schicht 65 bis 85 Gew.% Kautschuk und 15 bis 35 Gew.% Polyolefin umfaßt.

29. Verfahren nach einem der Ansprüche 19 bis 28, bei dem der Kautschuk PIB, Butylkautschuk, halogenierter Butylkautschuk, EPM, EPDM oder Polychloropren und das Polyolefin PP oder RCPP ist.

30. Behälter für Flüssigkeiten und Feststoffe der einen Beutel gebildet aus einer Verbundfolie hergestellt nach dem Verfahren gemäß einem der Ansprüche 19 bis 29 oder einer Verbundfolie gemäß einem der Ansprüche 1 bis 18 umfaßt.

31. Behälter nach Anspruch 30 ausgebildet für die Aufnahme von Blut oder einer Arzneimittellösung zur parenteralen Anwendung oder dies bzw. diese enthaltend.

**Revendications**

1. Film composite, comprenant un noyau central contenant du caoutchouc et au moins une couche externe constituée d'une résine polyoléfinique, caractérisé en ce que le noyau central contenant du caoutchouc comprend 50 à 85% en poids de caoutchouc choisi entre PIB, caoutchouc butyle, EPM, EPDM, caoutchouc butyle halogéné ou polychloroprène et 15 à 50% en poids d'une polyoléfine.

2. Film composite suivant la revendication 1, dans lequel la couche externe de polyoléfine consiste en polypropylène CRPP, PEHD, PELBD, polybutène-1 ou leurs mélanges.

3. Film composite suivant la revendication 1 ou 2, dans lequel le noyau central de caoutchouc comprend 55 à 70% en poids de caoutchouc et 30 à 45% en poids d'une polyoléfine.

4. Film composite suivant la revendication 1 ou 2, dans lequel le noyau central de caoutchouc comprend 60 à 85% en poids de caoutchouc et 15 à 40% en poids d'une polyoléfine.

5. Film composite suivant la revendication 1, 2, 3 ou 4, qui comprend une structure en sandwich formée de deux pellicules de polyoléfine avec un noyau interne contenant du caoutchouc.

6. Film composite suivant l'une quelconque des revendications précédentes, dans lequel le noyau central contenant du caoutchouc comprend un mélange de PIB avec une polyoléfine PP ou CRPP.

7. Film composite suivant l'une quelconque des revendications précédentes, dans lequel au moins une couche externe a un brillant sous un angle de 45° au moins égal à 50, de préférence au moins égal à 60 et notamment au moins égal à 75.

8. Film composite suivant la revendication 1, dans lequel la couche externe polyoléfinique comprend du PVDC ou du EVOH.

9. Film composite suivant l'une quelconque des revendications précédentes, ayant au moins une surcouche liée à au moins une couche externe.

10. Film composite suivant la revendication 9, dans lequel la surcouche est liée à la pellicule externe au moyen d'une couche de liaison adhésive.

11. Film composite suivant la revendication 9 ou 10, dans lequel la surcouche comprend un film polyoléfinique constitué de PVDC ou de EVOH.

12. Film composite suivant la revendication 9 ou 10, dans lequel la surcouche comprend une feuille métallique, de préférence d'aluminium ou de cuivre.

13. Film composite suivant la revendication 5 ou l'une quelconque des revendications 6 à 12 subordonnées à la revendication 5, dans lequel une couche externe de polyoléfine comprend une polyoléfine différente de l'autre couche externe polyoléfinique.

14. Film composite suivant la revendication 13, dans lequel une couche externe polyoléfinique comprend du PP ou du CRPP et l'autre couche externe polyoléfinique comprend du PVDC.

15. Film composite suivant la revendication 14, dans lequel le caoutchouc comprend au moins un caoutchouc halogéné.

16. Film composite suivant la revendication 14 ou 15, dans lequel le PVDC est lié à la composition de caoutchouc par une couche de liaison.

17. Film composite suivant la revendication 16, dans lequel la couche de liaison est un adhésif à base de polyuréthanne.

18. Film composite suivant la revendication 5 ou l'une quelconque des revendications 6 à 13 subordonnées à la revendication 5, dans lequel les couches externes polyoléfiniques sont constituées d'une polyoléfine autre que le PVDC et l'une au moins desdites couches externes polyoléfiniques est recouverte d'un film de PVDC qui y adhère.

19. Procédé de production d'un film composite, qui consiste:

a) à co-extruder une composition fondue comprenant une première couche co-extrudée et au moins une seconde couche co-extrudée, la première couche co-extrudée étant une composition contenant du caoutchouc, comprenant 50 à 85% en poids de caoutchouc, et la seconde couche co-extrudée comprenant une polyoléfine, de manière à former une bande continue de film composite desdites première et seconde couches co-extrudées;

b) à faire passer la bande à une température supérieure à son point de ramollissement dans l'intervalle de pincement entre deux rouleaux tournant en sens contraire, l'un desdits rouleaux étant un premier rouleau refroidisseur en métal très lisse et le second rouleau étant un rouleau élastique;

c) à refroidir le mélange pour produire un film composite dont au moins une surface a un brillant sous 45° au moins égal à 40.

20. Procédé suivant la revendication 19, dans lequel le brillant de surface sous un angle de 45° est au moins égal à 50.

21. Procédé suivant la revendication 19 ou 20, dans lequel le second rouleau est un rouleau élastique ayant une surface de caoutchouc de brillant élevé.

22. Procédé suivant la revendication 19, 20 ou 21, dans lequel le film composite comprend deux secondes couches co-extrudées entre lesquelles la première couche co-extrudée est intercalée.

23. Procédé suivant la revendication 22, dans lequel chaque seconde couche comprend la même résine polyoléfinique.

24. Procédé suivant la revendication 22, dans lequel une seconde couche co-extrudée comprend une polyoléfine différente de celle de l'autre seconde couche.

25. Procédé suivant la revendication 24, dans lequel une seconde couche co-extrudée est formée de PP ou de CRPP et l'autre est formée de PVDC.

26. Procédé suivant la revendication 25, dans lequel une couche de liaison est utilisée entre le PVDC et la composition de caoutchouc.

27. Procédé suivant la revendication 26, dans lequel la couche de liaison est un adhésif à base de polyuréthanne.

28. Procédé suivant l'une quelconque des revendications 19 à 27, dans lequel la première couche coextrudée comprend 65 à 85% en poids de caoutchouc et 15 à 35% en poids de polyoléfine.

29. Procédé suivant l'une quelconque des revendications 19 à 28, dans lequel le caoutchouc consiste en PIB, caoutchouc butyle, caoutchouc butyle halogéné, EPM, EPDM ou polychloroprène et la polyoléfine consiste en PP ou en CRPP.

30. Récipient pour liquides ou solides, comprenant une poche formée d'un film composite réalisé conformément au procédé suivant l'une quelconque des revendications 19 à 29 ou à partir d'un film composite suivant l'une quelconque des revendications 1 à 18.

31. Récipient suivant la revendication 30, apte à contenir ou contenant du sang ou une solution parentérale de médicament.

SCHEMATIC OF COEXTRUSION PROCESS

FIG.1

EFFECT OF FILM GAUGE AND COMPOSITION ON WVTR PROPERTIES

VX - POLYISOBUTYLENE
KRATON- ETHYLENE-BUTYLENE/STYRENE
BLOCK COPOLYMER
PPRC-PP REACTOR COPOLYMER

EP or KRATON / PPRC

VX/HDPE
PVC INNER

VX/PPRC COEX

WVTR 100F & 100% RH, gr./sq. m./day

FILM GAUGE, mils

FIG. 2

EP 0 165 791 B1